# EUROPÄISCHE PATENTANMELDUNG

(11) **EP 4 761 009 A1**
(43) Veröffentlichungstag der Anmeldung: **17.06.2026**
(21) Anmeldenummer: 25220619.8
(22) Anmeldetag: 04.12.2025
(51) Int. Cl.: H01R 13/627, H01R 35/00, H01R 13/52, H01R 13/58

(54) **VERDREHBARE STECKVERBINDERBAUGRUPPE MIT RADIALER VERRASTUNG**

(30) Priorität: 10.12.2024 DE 102024136911
(71) Anmelder: Lapp Engineering AG, 6330 Cham (CH)
(72) Erfinder: SEGRT, Ivica, 75392 Deckenpfronn (DE); JURAK, Marek, 76001 Zlín (DE); FUNK, Siegfried, 94551 Lalling (DE)
(74) Vertreter: Schicker, Silvia

(57) **Zusammenfassung**

Verdrehbare Steckverbinderbaugruppe, mit einem ersten Steckerelement und einem zweiten Steckerelement, welches einen im Wesentlichen kreishohlzylinderförmigen Abschnitt umfasst. Das erste Steckerelement und das zweite Steckerelement sind in einem verbundenen Zustand zumindest teilweise ineinander anordenbar und in dem verbundenen Zustand gegeneinander verdrehbar. Der im Wesentlichen kreishohlzylinderförmige Abschnitt des zweiten Steckerelements weist am Umfang Rastzähne auf, die im verbundenen Zustand dem ersten Steckerelement zugewandt sind. In dem ersten Steckerelement ist mindestens ein Federelement vorgesehen, welches mindestens eine Federnase umfasst, welche dazu eingerichtet ist, im verbundenen Zustand zwischen zwei benachbarten Rastzähnen des zweiten Steckerelements einzurasten.

## Beschreibung

### Hintergrund der Erfindung

Die Erfindung betrifft eine verdrehbare Steckverbinderbaugruppe mit radialer Verrastung, wie sie beispielsweise bei Winkelsteckergehäusen verwendet werden, die an einem Aggregat befestigt sind.

Winkelsteckergehäuse bestehen aus einem aggregatseitigen Steckerteil, das an einem Aggregat befestigt ist, und einem dazu winklig angeordneten Abgangssteckerteil. Das Abgangssteckerteil ist um die Längsachse des aggregatseitigen Steckerteils drehbar angeordnet. Im Einsatz muss einerseits die Drehstellung des Abgangssteckerteils verändert werden können, um das Winkelsteckergehäuse an die jeweiligen Einsatzbedingungen anzupassen, andererseits muss die gewählte Drehstellung unempfindlich gegenüber Vibrationen sicher gehalten werden. Folglich muss zum Verdrehen des Abgangssteckerteils ein gewisses Mindestdrehmoment erforderlich sein, und in der gewählten Drehstellung muss eine sichere Rastung erfolgen. Die sichere Rastung und das Mindestdrehmoment müssen auch nach einer Vielzahl von Drehvorgängen eingehalten werden.

### Stand der Technik

Aus DE 298 13 455 U1 ist eine verdrehbare Steckverbinderbaugruppe bekannt, die ein äußeres Steckerteil, das im Querschnitt entlang seines Innenumfangs polygonartig ausgebildet ist, wobei an den Polygonflächen Blattfedern vorgesehen sind, und ein inneres Steckerteil umfasst, das im Querschnitt entlang seines Außenumfangs polygonartig ausgebildet ist und in dem äußeren Steckerteil angeordnet ist. In einer Raststellung liegen die Polygonflächen des inneren Steckerteils an den Blattfedern an. Das erzeugt je nach gewählter Federkraft nur eine bedingt stabile Rastung. Werden die beiden Steckerteile zueinander verdreht, drücken Außenkanten des inneren Steckerteils gegen die Blattfedern, was einen Verschleiß erzeugt und zu einem Abrunden des inneren Steckerteils führt. Durch das Abrunden des inneren polygonartigen Steckerteils nimmt das zum Verdrehen erforderliche Drehmoment ab, und dadurch kann eine stabile Rastung nicht mehr gewährleistet sein. Ferner wird durch das Verdrehen der Steckerteile ein Abrieb erzeugt, der das Aggregat beschädigen kann.

Aus EP 1 753 092 A1 ist eine verdrehbare Steckverbinderbaugruppe bekannt, die ein erstes Steckerelement und ein zweites Steckerelement umfasst, das im Wesentlichen kreishohlzylinderförmig ausgebildet ist, wobei das erste Steckerelement und das zweite Steckerelement zumindest teilweise ineinander angeordnet und gegeneinander verdrehbar sind, das zweite Steckerelement am Umfang Rastzähne aufweist, die dem ersten Steckerelement zugewandt sind, und in dem ersten Steckerelement eine Mehrzahl von radial beweglichen Raststiften und eine Mehrzahl von Federelementen angeordnet ist, wobei jedes Federelement einen Raststift radial in Richtung auf die Rastzähne des zweiten Steckerelements hin drängt. Dadurch, dass mehrere Federelemente und mehrere Raststifte vorgesehen sind, ist der Zusammenbau der Steckverbinderbaugruppe relativ aufwändig. Ferner ist zur axialen Sicherung des ersten und zweiten Steckerelements ein Haltering erforderlich, der alleine durch Federvorspannung befestigt ist, was gegebenenfalls zu einer nicht ausreichenden Sicherung führt. Ferner ist eine Demontage der Steckverbinderbaugruppe nicht oder nur mit großem Aufwand zerstörungsfrei möglich.

### Aufgabe der Erfindung

Es ist eine Aufgabe der Erfindung, eine verdrehbare Steckverbinderbaugruppe bereitzustellen, die mindestens eines der oben geschilderten Probleme und/oder ein damit in Zusammenhang stehendes Problem löst.

### Erfindungsgemäße Lösung

Erfindungsgemäß wird die Aufgabe durch eine verdrehbare Steckverbinderbaugruppe gelöst, mit einem ersten Steckerelement und einem zweiten Steckerelement, welches einen im Wesentlichen kreishohlzylinderförmigen Abschnitt umfasst. Das erste Steckerelement und das zweite Steckerelement sind in einem verbundenen Zustand zumindest teilweise ineinander anordenbar und in dem verbundenen Zustand gegeneinander verdrehbar. Der im Wesentlichen kreishohlzylinderförmige Abschnitt des zweiten Steckerelements weist am Umfang Rastzähne auf, die im verbundenen Zustand dem ersten Steckerelement zugewandt sind. In dem ersten Steckerelement ist mindestens ein Federelement vorgesehen, welches mindestens eine Federnase umfasst, welche dazu eingerichtet ist, im verbundenen Zustand zwischen zwei benachbarten Rastzähnen des zweiten Steckerelements einzurasten.

### Vorteile, Ausgestaltung und Weiterbildungen der Erfindung

Dadurch, dass das Federelement mindestens eine Rastnase umfasst, werden keine zusätzlichen Pins benötigt und die Anzahl der benötigten Federelemente kann (beispielsweise auf eins oder zwei) reduziert werden. Dies kann die Herstellung, den Zusammenbau und/oder die Demontage der Steckverbinderbaugruppe vereinfachen. Insbesondere kann eine zerstörungsfreie Demontage möglich sein. Auch kann ein Austausch des Federelements bzw. der Federelemente samt Federnase(n), beispielsweise zum Ändern eines Mindestdrehmoments, vereinfacht sein.

Das mindestens eine Federelement kann eine Mehrzahl von Federnasen umfasst, welche jeweils dazu eingerichtet sind, im verbundenen Zustand zwischen zwei benachbarten Rastzähnen des zweiten Steckerelements einzurasten.

Wenn ein Federelement eine Mehrzahl von Federnasen umfasst, kann beispielsweise eine Anzahl von Federelementen reduziert werden und somit Material und/oder Herstellungsaufwand gespart werden, bei bleichbleibender Gesamtzahl von Federnasen. Ferner kann eine relative Position und/oder Ausrichtung der Mehrzahl von Federnasen zueinander gewährleistet sein, da die Mehrzahl von Federnasen durch das gemeinsame Federelement miteinander verbunden ist.

Bei der verdrehbaren Steckverbinderbaugruppe können das erste Steckerelement und das zweite Steckerelement so ausgestaltet sein, dass im verbundenen Zustand eine formschlüssige Verbindung des ersten Steckerelements und des zweiten Steckerelements hinsichtlich einer axial wirkenden Kraft gewährleistet ist.

Bei der verdrehbaren Steckverbinderbaugruppe kann das zweite Steckerelement einen Haltering umfassen, welcher einen ringförmig verlaufenden und radial nach innen weisenden Halteabschnitt umfasst, der im verbundenen Zustand in eine an einer Außenseite des kreishohlzylinderförmigen Abschnitts des zweiten Steckerelements vorgesehene Nut eingreift. Der Halteabschnitt kann beispielsweise einen rechteckigen Querschnitt oder einen rechteckigen Querschnitt mit abgerundeten Ecken aufweisen. Der Halteabschnitt kann als ringförmiger Vorsprung ausgebildet sein, welcher sich, ausgehend von einem ringförmigen Basisabschnitt des Halterings, radial nach innen erstreckt. Somit kann der Haltering beispielsweise einen im Wesentlichen L-förmigen Querschnitt aufweisen. Der Haltering kann jedoch auch so ausgebildet sein, dass er einen rechteckigen Querschnitt aufweist. Durch Vorsehen des Halterings und der zugehörigen Nut wird eine axiale Verrastbarkeit gewährleistet.

Der Haltering kann entweder als vollständig geschlossener Ring oder als nicht vollständig geschlossener Ring, d. h. als Ring mit einer Öffnung vorgesehen sein. Wenn der Haltering als Ring mit einer Öffnung bereitgestellt wird, kann ggf. dessen Radius leichter vergrößert werden, um das zweite Steckerelement in das erste Steckerelement einzufügen.

Bei der verdrehbaren Steckverbinderbaugruppe kann das Eingreifen des Halteabschnitts in die Nut eine formschlüssige Verbindung des ersten Steckerelements und des zweiten Steckerelements hinsichtlich einer axial wirkenden Kraft bewirkt. Durch Überwinden einer vorbestimmten axialen Mindestkraft kann die formschlüssige Verbindung gelöst werden und das zweite Steckerelement vom ersten Steckerelement getrennt werden und somit der verbundene Zustand gelöst werden.

Bei der verdrehbaren Steckverbinderbaugruppe kann die Nut innerhalb der Rastzähne vorgesehen sein. Die Rastzähne können senkrecht zur Nut verlaufen, wobei die Rastzähne entlang der axialen Richtung und die Nut in Umfangrichtung verläuft. Die Nut kann insbesondere so ausgebildet sein, dass ein Bodenabschnitt der Nut radial auf demselben Niveau liegt wie ein Bodenabschnitt der Zwischenräume zwischen den Rastzähnen. Die Nut kann jedoch auch tiefer oder weniger tief ausgestaltet sein.

Die Rastzähne können sich in axiale Richtung betrachtet (d. h. entlang einer Einschubrichtung) an beiden Seiten der Nut befinden. Insbesondere können sich die Rastzähne auch an einer Seite der Nut befinden, die einer Stirnseite des zweiten Steckerelements entspricht. In diesem Fall kann das Einschieben des ersten Steckerelements in das zweite Steckerelement erleichtert sein, da die Federnasen in axiale Richtung sofort in die Zwischenräume zwischen den Rastzähnen hineingleiten können. Somit ist ein geführtes Verbinden der Steckverbinderbaugruppe möglich.

Bei der verdrehbaren Steckverbinderbaugruppe kann das erste Steckerelement einen O-Ring umfassen, welcher ringförmig um den Haltering herum verläuft und dazu eingerichtet ist, diesen radial nach innen zu drücken. Der O-Ring kann somit zwischen einem Grundkörper des ersten Steckerelements und dem Haltering angeordnet sein. Beim Einschieben des zweiten Steckerelements wird der Haltering radial nach außen gegen den O-Ring gedrückt, welcher sich elastisch verformt und somit eine elastische Rückstellkraft radial gegen den Haltering wirken lässt, die dazu führt, dass der Haltering sicher in der Nut des zweiten Steckerelements einrasten kann.

Bei der verdrehbaren Steckverbinderbaugruppe kann das erste Steckerelement in axiale Richtung auf einer im verbundenen Zustand dem zweiten Steckerelement abgewandten Seite so geöffnet sein, dass der Haltering und der O-Ring in axiale Richtung entnommen werden können. Somit kann eine Montage und/oder Demontage der Steckverbinderbaugruppe erleichtert werden.

Bei der verdrehbaren Steckverbinderbaugruppe kann das erste Steckerelement einen Flansch mit Schraubenöffnungen umfassen, zum Anschrauben des ersten Steckerelements an eine ebene Fläche, sodass in einem angeschraubten Zustand des ersten Steckerelements der O-Ring und der Haltering zwischen der ebenen Fläche und dem ersten Steckerelement eingeklemmt sind. Somit können der O-Ring und der Haltering in einem angebrachten Zustand des ersten Steckerelements sicher gehalten werden. Eine Entnahme dieser Komponenten ist über ein Abschrauben des ersten Steckerelements möglich.

Bei der verdrehbaren Steckverbinderbaugruppe kann in dem ersten Steckerelement genau ein einstückig ausgebildetes Federelement vorgesehen sein, welches die Mehrzahl von Federnasen umfasst. Die Mehrzahl von Federnasen kann insbesondere 2, 3 oder 4 Federnasen sein. Wenn im ersten Steckerelement lediglich ein einstückig ausgebildetes Federelement vorgesehen ist, so kann insbesondere die Montage und/oder die Demontage erheblich erleichtert werden, im Vergleich zu einem Fall, in dem mehrere Federelemente vorgesehen sind. Wenn das Federelement die Mehrzahl von Federnasen umfasst, müssen keine zusätzlichen Pins oder Raststifte vorgesehen sein, was die Herstellung, Montage und/oder Demontage vereinfachen kann. Insbesondere in dem Fall, dass 4 Federnasen vorgesehen sind, können jeweils zwei Federnasen gegenüber angeordnet sein, sodass deren radialen Kräfte in entgegengesetzte Richtungen wirken.

Das Federelement kann beispielsweise als vollständig geschlossener gewellter Ring bereitgestellt werden. Ferner kann das Federelement als gewellter Ring mit einer Öffnung bereitgestellt werden. In diesem Fall kann das Federelement beispielsweise auf einfache Weise aus einem Blech hergestellt werden. Grundsätzlich wird hierin, falls nicht explizit anders angegeben, mit dem Begriff "Ring" bzw. "ringförmig" auch ein Ring gemeint, welcher nicht geschlossen ist und somit eine Öffnung aufweist.

Selbstverständlich ist jedoch auch ein geschlossener Ring gemeint, sofern nicht explizit ausgeschlossen.

In dem ersten Steckerelement können mindestens zwei und insbesondere genau zwei jeweils einstückig ausgebildete Federelemente vorgesehen sein, welche jeweils mindestens eine Federnase umfassen. Insbesondere können genau zwei Federelemente vorgesehen sein, welche jeweils genau zwei Federnasen umfassen. Durch das Vorsehen von zwei Federelementen (anstelle von einem) kann beispielsweise Material gespart werden, welches ansonsten die beiden Federelemente zu einem Federelement verbinden würde.

Bei der verdrehbaren Steckverbinderbaugruppe kann die mindestens eine Federnase des mindestens einen Federelements (d. h., des einen Federelements oder - falls vorhanden - der mehreren Federelemente) dazu eingerichtet sind, im verbundenen Zustand im direkten Kontakt mit den Rastzähnen des zweiten Steckerelements zu stehen. Die mindestens eine Federnase berührt somit direkt die Rastzähne und es werden keine zusätzlichen Pins oder Raststifte benötigt.

Bei der verdrehbaren Steckverbinderbaugruppe kann das mindestens eine Federelement als ein einstückig wellig geformtes Federblech ausgebildet sein und die mindestens eine Federnase durch Biegung des Federblechs gebildet und somit Bestandteil des Federblechs sein. Eine einstückige Ausgestaltung des Federblechs kann die Herstellung, die Montage und/oder die Demontage erleichtern. Wenn die mindestens eine Federnase durch Biegung des Federblechs gebildet ist, ist einerseits eine kontrollierte Federkraft einstellbar und andererseits ist die Herstellung der Federnase(n) einfach möglich.

Bei der verdrehbaren Steckverbinderbaugruppe kann das Federblech eine konstante Dicke aufweisen. Insbesondere weist in diesem Fall das Federblech im Bereich der Rastnasen dieselbe Dicke auf wie in den übrigen Bereichen des Federblechs. Mit Dicke ist eine Blechstärke gemeint, also eine Dicke des Federblechs senkrecht zu einer gewellten Oberfläche des Federblechs. Wenn die Dicke konstant ist, kann das Federblech samt Federnase(n) auf einfache Weise beispielsweise aus einem Blech konstanter Dicke hergestellt werden. Durch einen Austausch des Federelements durch ein Federelement anderer Dicke, insbesondere anderer konstanter Dicke, kann auf einfache Weise ein Drehmoment geändert werden, welches zum Verdrehen der Steckerelemente zueinander erforderlich ist.

Bei der verdrehbaren Steckverbinderbaugruppe kann das mindestens eine Federelement unter Vorspannung in einer Aufnahmeausnehmung des ersten Steckerelements aufgenommen sein. Die Aufnahmeausnehmung für die mindestens eine Federnase kann eine radiale Öffnung aufweisen, durch welche die jeweilige Federnase radial nach innen ragt. Die Vorspannung kann dazu dienen, dass das mindestens eine Federelement sicher in der Aufnahmeausnehmung aufgenommen ist und nicht herausfallen kann. Die radiale Öffnung kann einen axial verlaufenden Schlitz umfassen. Die radiale Öffnung kann im Wesentlichen rechteckig sein. Wenn lediglich die Rastnasen des Federblechs durch ihre jeweilige Öffnung nach innen ragen, kann ein sicheres radiales Einrasten des zweiten Steckerelements gewährleistet werden, wobei gleichzeitig das Federblech sicher gehalten ist.

Die verdrehbare Steckverbinderbaugruppe kann ferner einen Dichtungsring umfassen, welcher an einer Innenseite des ersten Steckerelements ringförmig verläuft und welcher im verbundenen Zustand eine Abdichtung zwischen dem ersten Steckerelement und dem zweiten Steckerelement bewirkt. Weitere Dichtungsringe können vorgesehen sein. Die Abdichtung kann insbesondere ein Eindringen von Flüssigkeiten in die Steckverbinderbaugruppe bzw. zwischen die beiden Steckerelement verhindern und somit einen sicheren Betrieb gewährleisten.

Bei der verdrehbaren Steckverbinderbaugruppe können die Rastzähne des zweiten Steckerelements einen im Wesentlichen trapezförmigen Querschnitt aufweisen. Hierdurch kann ein Abrieb der Rastzähne beim Verdrehen des zweiten Steckerelements reduziert werden und/oder ein Verdrehen erleichtert werden.

Bei der verdrehbaren Steckverbinderbaugruppe kann das erste Steckerelement und das zweite Steckerelement so konfiguriert sein, dass sich im verbundenen Zustand das zweite Steckerelement zumindest teilweise in dem ersten Steckerelement befindet, eine Außenumfangsfläche des zweiten Steckerelements einer Innenumfangsfläche des ersten Steckerelements zugewandt ist und die mindestens eine Federnase des mindestens einen Federelements durch das mindestens eine Federelement radial nach innen gegen die am Außenumfang des zweiten Steckerelements gebildeten Rastzähne gedrängt wird.

Wenn hierin Eigenschaften der "mindestens einen Federnase" beschrieben werden, so kann dies bedeuten, dass die jeweilige Eigenschaft auf die eine Federnase sowie auf sämtliche der möglicherweise vorhandenen weiteren Federnasen zutreffen. Wenn hierin Eigenschaften des "mindestens einen Federelements" beschrieben werden, so kann dies bedeuten, dass die jeweilige Eigenschaft auf das eine Federelement sowie auf sämtliche der möglicherweise vorhandenen weiteren Federelemente zutreffen.

### Kurzbeschreibung der Zeichnung

Nachfolgend werden Ausführungsbeispiele der Erfindung anhand der Zeichnungen näher beschrieben.
Figur 1 zeigt eine perspektivische Ansicht einer ersten Ausführungsform eines ersten Steckerelements einer erfindungsgemäßen verdrehbaren Steckverbinderbaugruppe.
Figur 2 zeigt eine perspektivische Ansicht eines ersten Steckerelements einer weiteren erfindungsgemäßen verdrehbaren Steckverbinderbaugruppe.
Figur 3 zeigt eine perspektivische Explosionsdarstellung einer zweiten Ausführungsform eines ersten Steckerelements einer erfindungsgemäßen verdrehbaren Steckverbinderbaugruppe.
Figur 4 zeigt eine Draufsicht auf das erste Steckerelement der Figur 3.
Figur 5 zeigt eine perspektivische Ansicht des ersten Steckerelements der Figur 3.
Figur 6 zeigt eine Draufsicht einer dritten Ausführungsform eines ersten Steckerelements einer erfindungsgemäßen verdrehbaren Steckverbinderbaugruppe.
Figur 7 zeigt eine perspektivische Ansicht eines zweiten Steckerelements einer erfindungsgemäßen verdrehbaren Steckverbinderbaugruppe.
Figur 8 zeigt eine Schnittansicht des Zusammenwirkens des ersten und zweiten Steckerelements einer erfindungsgemäßen verdrehbaren Steckverbinderbaugruppe im verbundenen Zustand.
Figur 9 zeigt eine perspektivische Ansicht einer erfindungsgemäßen verdrehbaren Steckverbinderbaugruppe im verbundenen Zustand.

### Detaillierte Beschreibung der Ausführungsformen

Im Folgenden werden räumliche Beziehungen, beispielsweise oben, unten, innen, außen, etc., verwendet, um die Ausführungsbeispiele anschaulich zu beschreiben. Der Fachmann versteht, dass das der anschaulichen Beschreibung dient und nicht als Beschränkung zu verstehen ist.

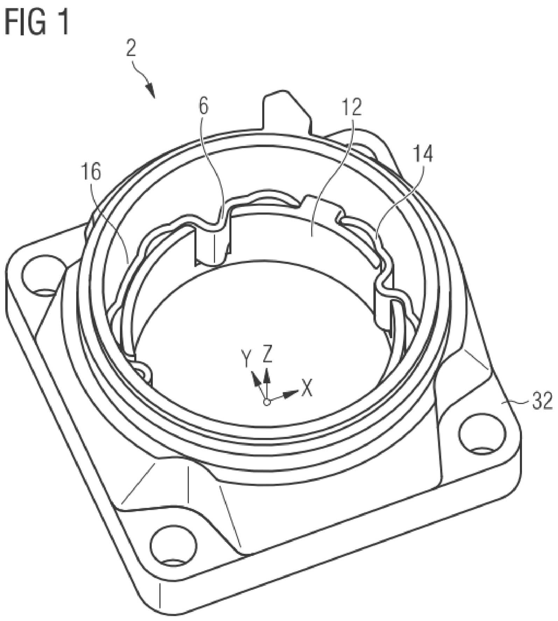

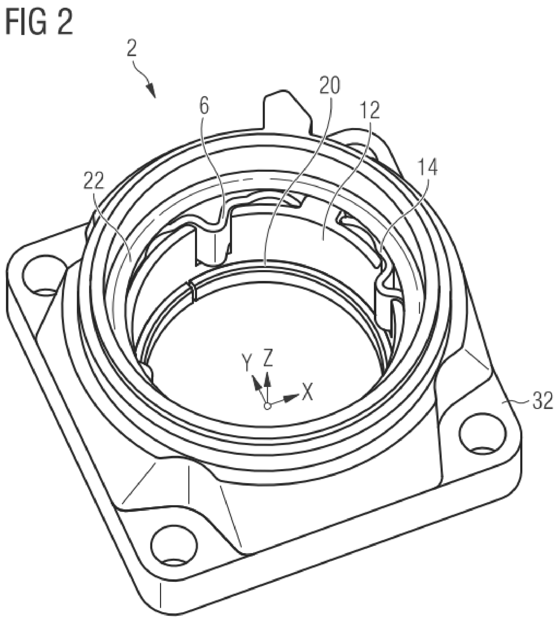

Figur 1 zeigt eine perspektivische Ansicht einer ersten Ausführungsform eines ersten Steckerelements 2 einer erfindungsgemäßen verdrehbaren Steckverbinderbaugruppe. Figur 2 zeigt ebenfalls eine perspektivische Ansicht eines ersten Steckerelements 2 einer erfindungsgemäßen verdrehbaren Steckverbinderbaugruppe. Die Figuren 1 und 2 können entweder als unterschiedliche Ausführungsformen erfindungsgemäßer Steckverbinderbaugruppen angesehen werden. In diesem Fall handelt es sich bei der ersten Ausführungsform der Figur 1 um eine, bei der das erste Steckerelement keinen Haltering und keinen Dichtungsring aufweist. Das erste Steckerelement 1 der alternativen Ausführungsform der Figur 2 weist jedoch einen Haltering 20 und einen Dichtungsring 22 auf. In einer alternativen Betrachtungsweise stellt die Figur 1 einen Zustand des ersten Steckerelements 2 der Figur 2 dar, in dem der Haltering 20 und der Dichtungsring 22 noch nicht montiert sind und somit zeigt sowohl Figur 1 als auch Figur 2 dieselbe erste Ausführungsform.

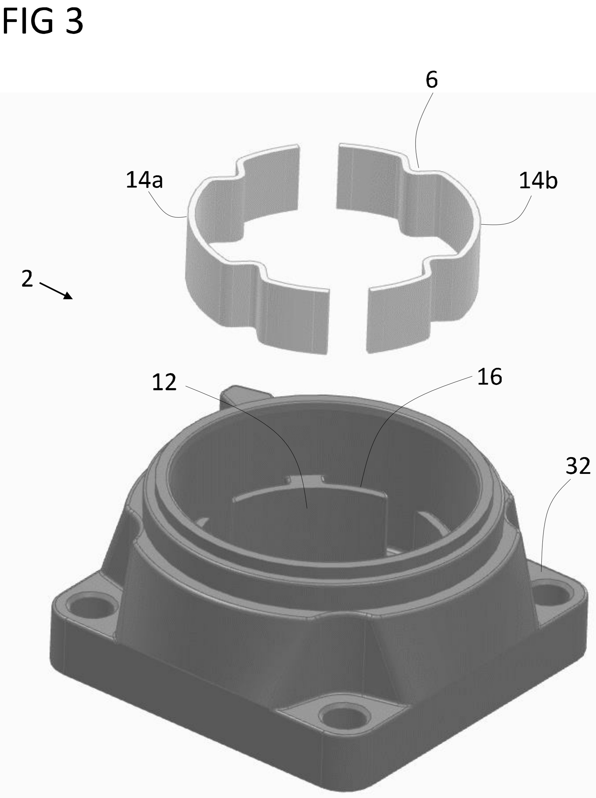

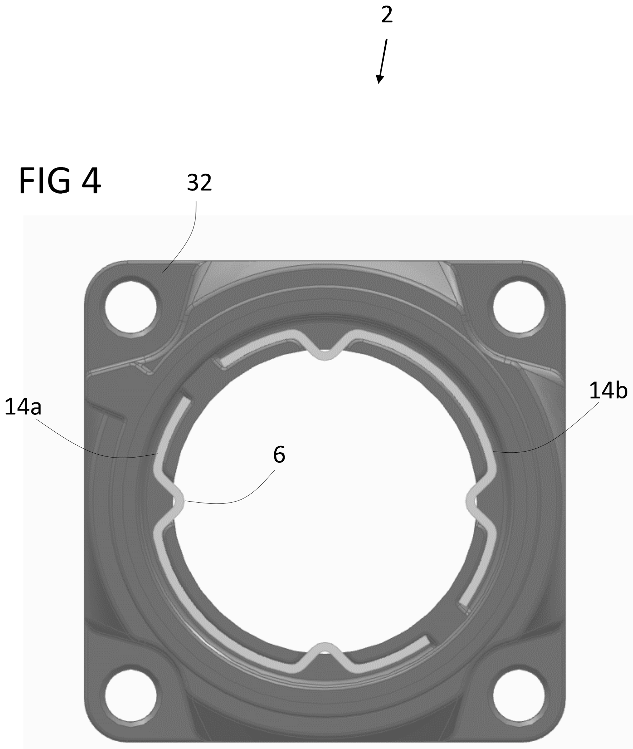

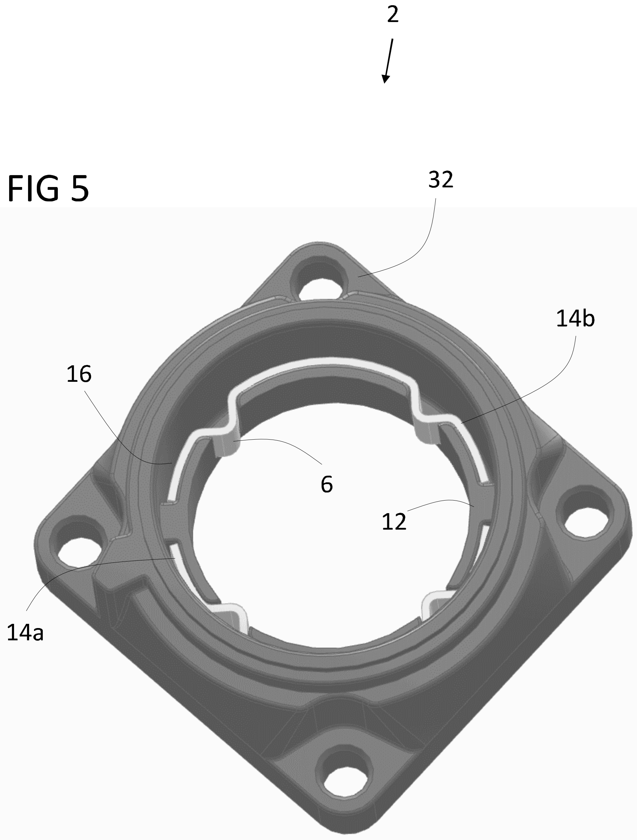

Die Figuren 3 bis 5 zeigen unterschiedliche Ansichten einer zweiten Ausführungsform eines ersten Steckerelements 2, wobei der wesentliche Unterschied zur ersten Ausführungsform des ersten Steckerelements der Figuren 1 und 2 darin besteht, dass das erste Steckerelement 2 der zweiten Ausführungsform anstatt eines Federelements 14 zwei Federelemente 14a und 14b umfasst. Ähnlich wie in Fig. 2 dargestellt, kann das erste Steckerelement 2 der zweiten Ausführungsform einen Haltering 20 und einen Dichtungsring 22 umfassen. Da das erste Steckerelement 2 der zweiten Ausführungsform der Figuren 3 bis 5 ansonsten identisch ist zu dem der Ausführungsform(en) der Figuren 1 und 2, gilt die folgende Beschreibung der Figuren 1 und 2 auch für die zweite Ausführungsform der Figuren 3 bis 5.

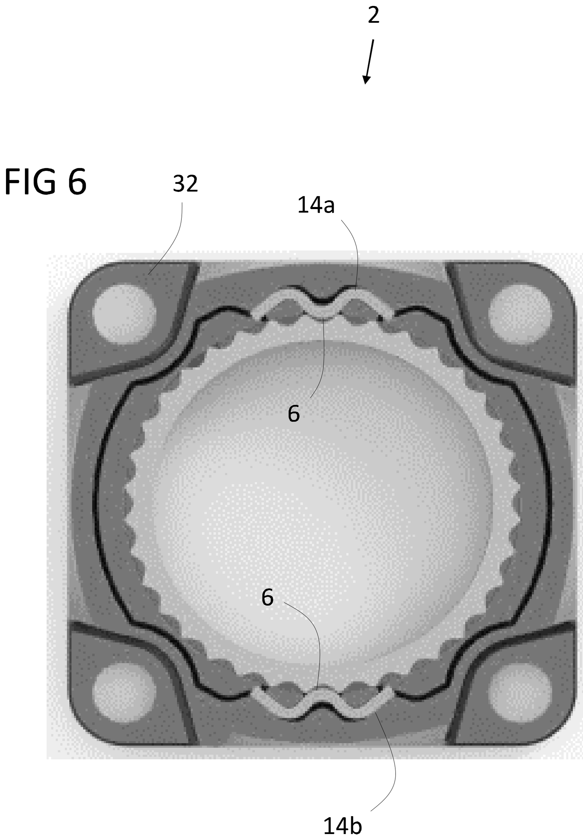

Die Figur 6 zeigt eine Draufsicht einer dritten Ausführungsform eines ersten Steckerelements 2, wobei eine Gemeinsamkeit zur zweiten Ausführungsform des ersten Steckerelements der Figuren 3 bis 5 darin besteht, dass das erste Steckerelement 2 der dritten Ausführungsform anstatt eines Federelements 14 zwei Federelemente 14a und 14b umfasst. Anders als die Federelemente 14a und 14b der zweiten Ausführungsform umfassen die Federelemente 14a und 14b der dritten Ausführungsform jedoch jeweils nur eine Federnase 6. Die beiden Federelemente 14a und 14b sind jeweils w-förmig. Ähnlich wie in Fig. 2 dargestellt, kann das erste Steckerelement 2 der dritten Ausführungsform einen Haltering 20 und einen Dichtungsring 22 umfassen. Da das erste Steckerelement 2 der dritten Ausführungsform der Figur 6 ansonsten identisch ist zu dem der Ausführungsform(en) der Figuren 1 und 2, gilt die folgende Beschreibung der Figuren 1 und 2 auch für die dritte Ausführungsform der Figur 6.

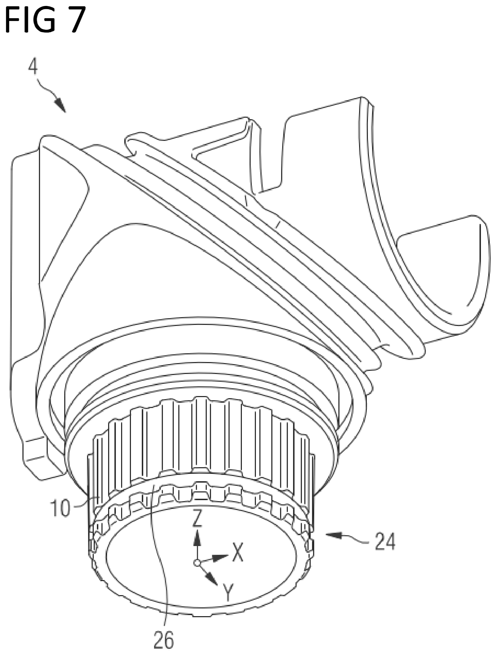

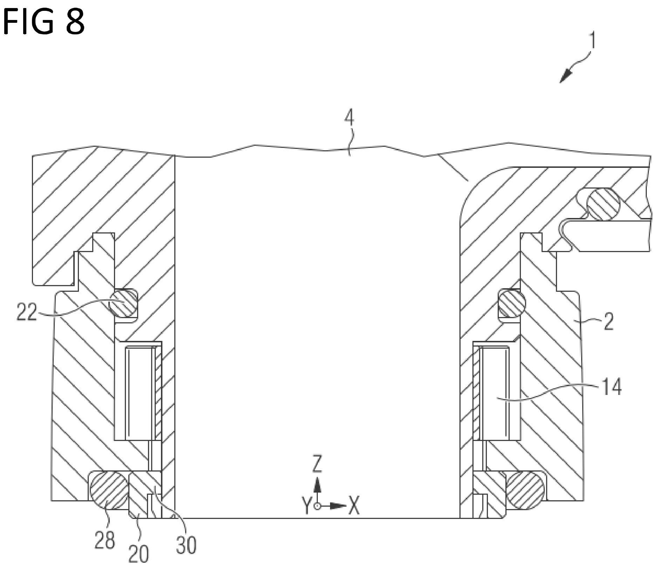

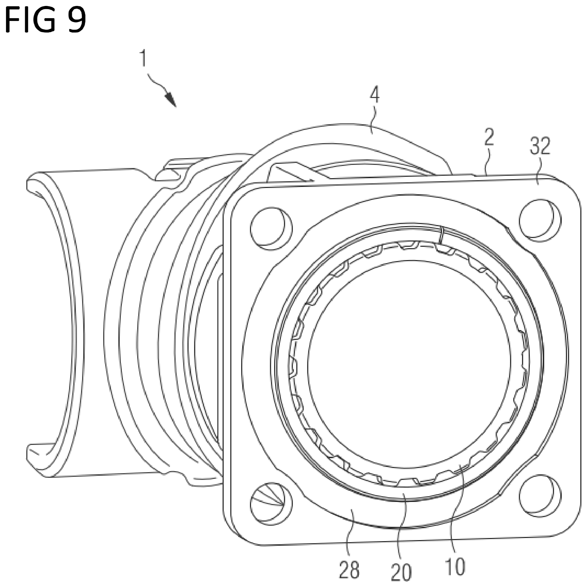

Figur 7 zeigt eine perspektivische Ansicht eines zweiten Steckerelements 4 einer erfindungsgemäßen verdrehbaren Steckverbinderbaugruppe. Das zweite Steckerelement 4 ist dazu geeignet, in axiale Richtung (hierin und gemäß den Figuren als z-Richtung definiert) in eine im wesentlichen kreiszylinderförmige Öffnung des ersten Steckerelements 2 gemäß einem der ersten bis dritten Ausführungsbeispiele der Figuren 1 bis 6 eingeführt zu werden, um einen verbundenen Zustand zu bilden, welcher beispielsweise in den Figuren 8 und 9 dargestellt ist. Das zweite Steckerelement 4 der Figur 7 bildet einen Gehäuseteil eines Winkelsteckers der Steckverbinderbaugruppe. Weitere Elemente des Winkelsteckers werden als bekannt vorausgesetzt und werden der Anschaulichkeit halber in den Figuren nicht dargestellt und hierin nicht beschrieben.

Die Figuren 8 und 9 zeigen unterschiedliche Ansichten der aus dem ersten Steckerelement 2 der Figur 2 bzw. eines der ersten Steckerelemente 2 der Figuren 3 bis 6 und dem zweiten Steckerelement 4 der Figur 7 gebildeten Steckverbinderbaugruppe 1 im verbundenen Zustand. Die Figuren 8 und 9 zeigen somit eine verdrehbare Steckverbinderbaugruppe 1 mit dem ersten Steckerelement 2 und dem zweiten Steckerelement 4. Das zweite Steckerelement 4 weist einen im Wesentlichen kreishohlzylinderförmigen Abschnitt 24 auf (siehe Figur 7), welcher eine radiale Richtung und eine axiale Richtung definiert. Gemäß den Figuren ist die axiale Richtung als z-Richtung definiert. Im verbundenen Zustand gemäß den Figuren 8 und 9 ist das zweite Steckerelement 4 in dem ersten Steckerelement 2 angeordnet.

Das zweite Steckerelement 4 umfasst im Querschnitt im Wesentlichen trapezförmige Rastzähne 10, die im verbundenen Zustand dem ersten Steckerelement 2 zugewandt sind und sich entlang des Außenumfangs des im Wesentlichen kreishohlzylinderförmigen Abschnitts 24 des zweiten Steckerelements 4 axial erstrecken.

Das erste Steckerelement 2 der ersten Ausführungsform gemäß Figur 1 bzw. Figur 2 umfasst vier Federnasen 6, welche integraler Bestandteil eines Federelements 14 sind. Das Federelement 14 ist als ein einstückig wellig geformtes Federblech ausgebildet. Im Fall der zweiten Ausführungsform der Figuren 3 bis 5 umfasst das erste Steckerelement 2 ebenfalls insgesamt vier Federnasen 6. Diese sind jedoch auf zwei Federelemente 14a, 14b aufgeteilt. Genauer gesagt umfasst das erste Steckerelement 2 der zweiten Ausführungsform zwei Federelemente 14a, 14b, welche jeweils zwei Federnasen 6 aufweisen. Das erste Steckerelement 2 der dritten Ausführungsform gemäß Figur 6 umfasst insgesamt zwei Federnasen 6, wobei jedes der beiden Federelemente 14a, 14b jeweils eine Federnase 6 umfasst.

Die Federnasen 6 sind in den ersten bis dritten Ausführungsformen durch Biegung des Federblechs gebildet und sind somit Bestandteil des Federblechs. Das Federelement 14, 14a, 14b ist in einer Aufnahmeausnehmung 16 des ersten Steckerelements 2 angeordnet, wo es aufgrund seiner Vorspannung eigenständig gehalten wird. Die Aufnahmeausnehmung 16 verläuft im Wesentlichen in Umfangrichtung um die kreiszylinderförmige Öffnung des ersten Steckerelements 2. Ausgehend von der Aufnahmeausnehmung 16 sind an Positionen der Federnaasen 6 Öffnungen vorgesehen, durch welche die Federnasen 6 in radiale Richtung zu einer Mittelachse der kreiszylinderförmigen Öffnung des ersten Steckerelements 2 hin ragen. Die Öffnungen sind in einem Rahmenelement 12 des ersten Steckerelements 2 vorgesehen. Das Federelement 14, 14a, 14b ist derart vorgespannt, dass es die Rastnasen 6 radial gegen das zweite Steckerelement 4 drängt. Die Rastnasen 6 sind jeweils unabhängig voneinander durch eine radial wirkende Kraft elastisch verformbar.

Die Anzahl der Federnasen 6 ist nicht auf vier beschränkt und kann je nach Bedarf frei gewählt werden, wobei mindestens zwei Federnasen 6 vorteilhaft sind. Ferner können beispielsweise zwei jeweils einstückige Federelemente 14a und 14b mit jeweils zwei Federnasen 6 vorgesehen sein und sich in einer zugehörigen Aufnahmeausnehmung 16 befinden, wie es gemäß dem zweiten Ausführungsbeispiel der Figuren 3 bis 5 dargestellt ist. Gemäß dem dritten Ausführungsbeispiel der Figur 6 können zwei jeweils einstückige Federelemente 14a und 14b mit jeweils einer Federnase 6 vorgesehen sein und sich in einer zugehörigen Aufnahmeausnehmung befinden.

Das erste Steckerelement 2 ist Teil eines (nicht gezeigten) aggregatseitigen Steckerteils, das an ein Aggregat angeschlossen werden kann, und das zweite Steckerelement 4 ist Teil eines (nicht gezeigten) Abgangssteckerteils. Das aggregatseitige Steckerteil und das Abgangssteckerteil bilden das Winkelsteckergehäuse.

Wird das zweite Steckerelement 4 bezüglich des ersten Steckerelements 2 verdreht, drängen die schrägen Seitenflächen der im Wesentlichen trapezförmigen Rastzähne 10 die jeweilige Federnase 6 radial nach außen, was eine Gegenkraft erzeugt, die gegen den Rastzahn 10 wirkt. Dadurch entsteht das zum Verdrehen und Entrasten des ersten Steckerelements 2 erforderliche Drehmoment. Die Kraft bzw. das Drehmoment können beispielsweise durch eine Wahl eines Materials des Federelements 14, 14a, 14b und/oder durch eine Wahl einer Dicke des Federelements 14, 14a, 14b (d. h. Materialstärke) festgelegt und bei Bedarf durch Austausch des Federelements 14 bzw. der Federelemente 14a, 14b geändert werden.

Die Entrastung erfolgt verschleißarm, da keine plastische Verformung auftritt. Das Federelement 14, 14a, 14b nimmt elastisch die radiale Bewegung und ggf. Verformung der Federnase 6 auf, ohne dass eine plastische Verformung des ersten Steckerelements 2 oder des zweiten Steckerelements 4 oder der Rastzähne 10 auftritt.

Wird das zweite Steckerelement 4 weiter gedreht, so dass die dem ersten Steckerelement 2 zugewandte radial äußere Fläche des im Wesentlichen trapezförmigen Rastzahns 10 die Federnase 6 berührt, befindet sich die Federnase 6 in einer Position großer radialer Verschiebung, und das Federelement 14, 14a, 14b erreicht einen Zustand höherer Federspannung. Wird das zweite Steckerelement 4 weiter gedreht, drängt das Federelement 14, 14a, 14b aufgrund seiner Federspannung die Federnase 6 in eine im Wesentlichen trapezförmige Nut (d. h. in einen Zwischenraum) zwischen zwei Rastzähnen 10. Dadurch wird eine zuverlässige Rastung erreicht. Eine spielfreie Rastung kann erreicht werden, falls die Federnase 6 in ihrer Rastposition die schrägen Seitenflächen von zwei im Wesentlichen trapezförmigen Rastzähnen 10 berührt.

In der Raststellung der Steckverbinderbaugruppe 1 befinden sich alle Federnasen 6 in einer Rastposition zwischen je zwei Rastzähnen 10, wodurch eine sichere Klemmung erreicht wird. Das zum Verdrehen des zweiten Steckerelements 4 bezüglich des ersten Steckerelements 2 erforderliche Drehmoment erzeugt durch die Federnasen 6 eine Kraft auf die Rastzähne 10, um die Federnasen 6 zu entrasten. Da beim Entrasten alle Federnasen 6 aus ihrer Rastposition bewegt werden, ist eine Entrastkraft, die von einer Federnase 6 auf den jeweiligen Rastzahn 10 ausgeübt wird, bei einem gegebenen Drehmoment, das zum Verdrehen erforderlich ist, relativ niedrig, da die aus dem Drehmoment resultierende Entrastkraft auf eine Mehrzahl von Federnasen 6 und eine Mehrzahl von Rastzähnen 10 aufgeteilt wird. Dadurch kann der Verschleiß reduziert werden. Die Rastzähne 10 und die Federnasen 6 erstrecken sich in axialer Richtung, wodurch eine verschleißmindernde größere Berührungsfläche bzw. größere Anpressfläche zwischen diesen entsteht. Die Rastzähne 10 müssen sich nicht notwendigerweise axial erstrecken, sie können sich auch parallel zueinander und schräg zur axialen Richtung erstrecken.

Der Fachmann erkennt, dass das im Wesentlichen trapezförmige Profil der Rastzähne 10 abgerundet sein kann, um den Verschleiß weiter zu minimieren. Ferner kann die radial äußere Fläche des im Wesentlichen trapezförmigen Rastzahns 10 reduziert werden, so dass ein nahezu dreieckiges Profil des Rastzahns 10 entsteht, wodurch der Abstand der Rastpositionen reduziert wird. Diese Ausgestaltung des Rastzahns 10 wird als äquivalent angesehen. Die im Wesentlichen trapezförmigen Rastzähne 10 erreichen, dass die Steckverbinderbaugruppe 1 unempfindlich gegenüber Herstellungstoleranzen ist.

Die Reibung und somit das Drehmoment können durch eine geeignete Oberflächenbeschichtung der Rastzähne 10, der Federnasen 6 und/oder der Federelemente 14, 14a, 14b reduziert werden. Ferner kann eine Schmierung vorgesehen werden.

Die erfindungsgemäße verdrehbare Steckverbinderbaugruppe 1 wurde derart beschrieben, dass sich das zweite Steckerelement 4 in dem ersten Steckerelement 2 befindet und die Rastzähne 10 radial nach außen gerichtet sind. Der Fachmann erkennt jedoch, dass eine derartige verdrehbare Steckverbinderbaugruppe 1 auch umgekehrt aufgebaut sein kann.

Neben der oben beschriebenen radialen Verrastung ermöglicht die Steckverbinderbaugruppe 1 der Figuren 2 bis 9 zusätzlich eine axiale Verrastung des zweiten Steckerelements 4 in Bezug auf das erste Steckerelement 2. Zu diesem Zweck weist das erste Steckerelement 2 einen Haltering 20 auf. Der Haltering 20 des ersten Steckerelements 2 ist dazu eingerichtet, im verbundenen Zustand in eine Nut 26 des zweiten Steckerelements 4 einzugreifen. Der Haltering 20 der dargestellten Ausführungsform weist eine Öffnung bzw. Unterbrechung auf, was eine Änderung des Radius des Halterings 20 ermöglicht oder erleichtert. Durch einen nachfolgend beschriebenen O-Ring 28 des ersten Steckerelements 2 wird eine radial nach innen wirkende Kraft auf den Haltering 20 ausgeübt, welche beim Einschieben des zweiten Steckerelements 4 überwunden werden muss, bis der Haltering 20 in der Nut 26 einrasten kann. Hierbei wird der Innenradius des Halterings 20 zwischenzeitlich vergrößert.

Wie in Figur 8 dargestellt ist, weist der Haltering einen ringförmig verlaufenden und radial nach innen weisenden Halteabschnitt 30 auf. Bei dem Halteabschnitt 30 handelt es sich um den Abschnitt des Halterings 20, welcher sich im verbundenen Zustand innerhalb der Nut 26 befindet. Wie in Figur 8 dargestellt, kann der Haltering 20 einen im Wesentlichen L-förmigen Querschnitt aufweisen. Der Halteabschnitt 30 weist dementsprechend einen im Wesentlichen rechteckigen Querschnitt mit abgerundeten Ecken auf.

Das Eingreifen des Halteabschnitts 30 in die Nut 26 bewirkt eine formschlüssige Verbindung des ersten Steckerelements 2 und des zweiten Steckerelements 4 hinsichtlich einer axial wirkenden Kraft. Durch Überwinden einer vorbestimmten axialen Minimalkraft kann die formschlüssige Verbindung gelöst werden und das zweite Steckerelement 4 vom ersten Steckerelement 2 getrennt werden und somit der verbundene Zustand gelöst werden.

Zum Ausüben einer radialen Kraft auf den Haltering 20 und zum Halten des Halterings 20 ist ein O-Ring 28 vorgesehen. Der O-Ring 28 befindet sich zwischen einem Grundkörper des ersten Steckerelements 2 und dem Haltering 20.

Das erste Steckerelement 2 ist in axiale Richtung auf einer im verbundenen Zustand dem zweiten Steckerelement 4 abgewandten Seite so geöffnet, dass der Haltering 20 und der O-Ring 28 in axiale Richtung entnommen werden können. Somit kann eine Montage und/oder Demontage der Steckverbinderbaugruppe 1 erleichtert werden.

Das erste Steckerelement 2 umfasst einen Flansch 32 mit Schraubenöffnungen, zum Anschrauben des ersten Steckerelements 2 an eine ebene Fläche, sodass in einem angeschraubten Zustand des ersten Steckerelements 2 der O-Ring 28 und der Haltering 20 zwischen der ebenen Fläche und dem ersten Steckerelement 2 eingeklemmt sind. Somit können der O-Ring 28 und der Haltering 20 in einem angebrachten Zustand des ersten Steckerelements 2 sicher gehalten werden. Eine Entnahme dieser Komponenten ist über ein Abschrauben des ersten Steckerelements 2 möglich.

Die verdrehbare Steckverbinderbaugruppe 1 umfasst einen Dichtungsring 22, welcher an einer Innenseite des ersten Steckerelements 2 ringförmig verläuft und welcher im verbundenen Zustand eine Abdichtung zwischen dem ersten Steckerelement 2 und dem zweiten Steckerelement 4 bewirkt. Weitere Dichtungsringe können vorgesehen sein. Die Abdichtung kann insbesondere ein Eindringen von Flüssigkeiten in die Steckverbinderbaugruppe 1 bzw. zwischen die beiden Steckerelemente 2, 4 verhindern und somit einen sicheren Betrieb gewährleisten.

## Patentansprüche

1. Verdrehbare Steckverbinderbaugruppe (1), mit
- einem ersten Steckerelement (2) und
- einem zweiten Steckerelement (4), welches einen im Wesentlichen kreishohlzylinderförmigen Abschnitt (24) umfasst,
- wobei das erste Steckerelement (2) und das zweite Steckerelement (4) in einem verbundenen Zustand zumindest teilweise ineinander anordenbar sind, und in dem verbundenen Zustand gegeneinander verdrehbar sind,
- der im Wesentlichen kreishohlzylinderförmige Abschnitt (24) des zweiten Steckerelements (4) am Umfang Rastzähne (10) aufweist, die im verbundenen Zustand dem ersten Steckerelement (2) zugewandt sind, und
- in dem ersten Steckerelement (2) mindestens ein Federelement (14; 14a, 14b) vorgesehen ist, welches mindestens eine Federnase (6) umfasst, welche dazu eingerichtet ist, im verbundenen Zustand zwischen zwei benachbarten Rastzähnen (10) des zweiten Steckerelements (4) einzurasten.

2. Verdrehbare Steckverbinderbaugruppe (1) nach Anspruch 1, wobei das mindestens eine Federelement (14; 14a, 14b) eine Mehrzahl von Federnasen (6) umfasst, welche jeweils dazu eingerichtet sind, im verbundenen Zustand zwischen zwei benachbarten Rastzähnen (10) des zweiten Steckerelements (4) einzurasten.

3. Verdrehbare Steckverbinderbaugruppe (1) nach Anspruch 1 oder 2, wobei das erste Steckerelement (2) und das zweite Steckerelement (4) so ausgestaltet sind, dass im verbundenen Zustand eine formschlüssige Verbindung des ersten Steckerelements (2) und des zweiten Steckerelements (4) hinsichtlich einer axial wirkenden Kraft gewährleistet ist.

4. Verdrehbare Steckverbinderbaugruppe (1) nach einem der Ansprüche 1 bis 3, wobei das zweite Steckerelement (4) einen Haltering (20) umfasst, welcher einen ringförmig verlaufenden und radial nach innen weisenden Halteabschnitt (30) umfasst, der im verbundenen Zustand in eine an einer Außenseite des kreishohlzylinderförmigen Abschnitts (24) des zweiten Steckerelements vorgesehene Nut (26) eingreift.

5. Verdrehbare Steckverbinderbaugruppe (1) nach Anspruch 4, wobei das Eingreifen des Halteabschnitts (30) in die Nut (26) eine formschlüssige Verbindung des ersten Steckerelements (2) und des zweiten Steckerelements (4) hinsichtlich einer axial wirkenden Kraft bewirkt.

6. Verdrehbare Steckverbinderbaugruppe (1) nach Anspruch 4 oder 5, wobei die Nut (26) innerhalb der Rastzähne (10) vorgesehen ist.

7. Verdrehbare Steckverbinderbaugruppe (1) nach einem der Ansprüche 4 bis 6, wobei das erste Steckerelement (2) einen O-Ring (28) umfasst, welcher ringförmig um den Haltering (20) herum verläuft und dazu eingerichtet ist, diesen radial nach innen zu drücken.

8. Verdrehbare Steckverbinderbaugruppe (1) nach Anspruch 7, wobei das erste Steckerelement (2) in axiale Richtung auf einer im verbundenen Zustand dem zweiten Steckerelement (4) abgewandten Seite so geöffnet ist, dass der Haltering (20) und der O-Ring (28) in axiale Richtung entnommen werden können.

9. Verdrehbare Steckverbinderbaugruppe (1) nach Anspruch 8, wobei das erste Steckerelement (2) einen Flansch (32) mit Schraubenöffnungen umfasst, zum Anschrauben des ersten Steckerelements (2) an eine ebene Fläche, sodass in einem angeschraubten Zustand des ersten Steckerelements (2) der O-Ring (28) und der Haltering (20) zwischen der ebenen Fläche und dem ersten Steckerelement (2) eingeklemmt sind.

10. Verdrehbare Steckverbinderbaugruppe (1) nach Anspruch 2, wobei in dem ersten Steckerelement (2) genau ein einstückig ausgebildetes Federelement (14) vorgesehen ist, welches die Mehrzahl von Federnasen (6) umfasst, wobei die Mehrzahl von Federnasen (6) insbesondere 2, 3 oder 4 Federnasen ist.

11. Verdrehbare Steckverbinderbaugruppe (1) nach einem der Ansprüche 1 bis 9, wobei in dem ersten Steckerelement (2) mindestens zwei und insbesondere genau zwei jeweils einstückig ausgebildete Federelemente (14a, 14b) vorgesehen sind, welche jeweils mindestens eine Federnase (6) umfassen.

12. Verdrehbare Steckverbinderbaugruppe (1) nach einem der Ansprüche 1 bis 11, wobei das mindestens eine Federelement (14; 14a, 14b) als ein einstückig wellig geformtes Federblech, insbesondere konstanter Dicke, ausgebildet ist und die mindestens eine Federnase (6) durch Biegung des Federblechs gebildet und somit Bestandteil des Federblechs ist.

13. Verdrehbare Steckverbinderbaugruppe (1) nach einem der Ansprüche 1 bis 12, wobei das mindestens eine Federelement (14; 14a, 14b) unter Vorspannung in einer Aufnahmeausnehmung (16) des ersten Steckerelements (2) aufgenommen ist und wobei die Aufnahmeausnehmung (16) für die mindestens eine Federnase (6) eine radiale Öffnung aufweist, durch welche die Federnase (6) radial nach innen ragt.

14. Verdrehbare Steckverbinderbaugruppe (1) nach einem der Ansprüche 1 bis 13, ferner umfassend einen Dichtungsring (22), welcher an einer Innenseite des ersten Steckerelements (2) ringförmig verläuft und welcher im verbundenen Zustand eine Abdichtung zwischen dem ersten Steckerelement (2) und dem zweiten Steckerelement (4) bewirkt.

15. Verdrehbare Steckverbinderbaugruppe (1) nach einem der Ansprüche 1 bis 14, wobei das erste Steckerelement (2) und das zweite Steckerelement (4) so konfiguriert sind, dass sich im verbundenen Zustand das zweite Steckerelement (4) zumindest teilweise in dem ersten Steckerelement (2) befindet, eine Außenumfangsfläche des zweiten Steckerelements (4) einer Innenumfangsfläche des ersten Steckerelements (2) zugewandt ist und die mindestens eine Federnase (6) des mindestens einen Federelements (14; 14a, 14b) durch das mindestens eine Federelement (14; 14a, 14b) radial nach innen gegen die am Außenumfang des zweiten Steckerelements (4) gebildeten Rastzähne (10) gedrängt wird.
